(19) **Europäisches Patentamt European Patent Office Office européen des brevets**

(11) **EP 4 315 935 B1**

(12) **EUROPEAN PATENT SPECIFICATION**

(45) Date of publication and mention of the grant of the patent:
**13.11.2024 Bulletin 2024/46**

(21) Application number: **22717125.3**

(22) Date of filing: **22.03.2022**

(51) International Patent Classification (IPC):
**H04W 24/02** *(2009.01)*

(52) Cooperative Patent Classification (CPC):
**H04W 24/02**

(86) International application number:
**PCT/EP2022/057441**

(87) International publication number:
**WO 2022/207402 (06.10.2022 Gazette 2022/40)**

(54) **METHOD AND SYSTEM FOR OPTIMIZING A MOBILE COMMUNICATIONS NETWORK**

VERFAHREN UND SYSTEM ZUR OPTIMIERUNG EINES MOBILEN KOMMUNIKATIONSNETZES

PROCÉDÉ ET SYSTÈME D'OPTIMISATION D'UN RÉSEAU DE COMMUNICATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2021 IT 202100008381**

(43) Date of publication of application:
**07.02.2024 Bulletin 2024/06**

(73) Proprietor: **Telecom Italia S.p.A.**
**20123 Milano (IT)**

(72) Inventors:
• **BIZZARRI, Simone**
 **10148 TORINO (IT)**
• **GHINAMO, Giorgio**
 **10148 TORINO (IT)**
• **GIANNANTONIO, Roberta**
 **10148 TORINO (IT)**
• **GRASSO, Ennio**
 **10148 TORINO (IT)**
• **MINERVA, Giuseppe**
 **10148 TORINO (IT)**

(74) Representative: **Maccalli, Marco et al**
**Maccalli & Pezzoli S.r.l.**
**Via Settembrini, 40**
**20124 Milano (IT)**

(56) References cited:
**WO-A2-2021/045225 CN-A- 109 946 673**

**Description**

Technical field

The present disclosure relates to the field of mobile communications networks. In particular, the present disclosure relates to the optimization of mobile communications networks. More specifically, the present disclosure is directed to a method of Coverage and Capacity Optimization (CCO) for mobile Self Organizing Networks (SON), and to a system for implementing the method.

Technical background

In the field of cellular mobile communications networks (in the following also referred to as "cellular networks" or "mobile networks" or "mobile communications networks", for the sake of conciseness), "Coverage and Capacity Optimization" ("CCO" in short) has the aim of providing the best configuration for network cells able of maximizing both network coverage and network capacity to mobile network users on the field. This can be achieved with modifications to adjustable, tunable parameters of the network cells. Examples of cells' tunable parameters are transmission power, electrical tilt and azimuth of the antennas, and any other available parameter affecting radiation diagram and power spatial distribution, including but not limiting parameters controlling radiation patterns for active antennas.

"Self Organizing Networks" ("SON" in short) is an automation technology paradigm able to perform the steps of planning and optimization (but also configuration and management) of cellular mobile communications networks, particularly of the fourth generation ("4G"), fifth generation ("5G") - where the impact of SON algorithms such as the CCO is expected to be particularly significant - and next generations, using a more flexible approach for continuous improvement of performance even in closed-loop configuration.

The SON paradigm aims to make the planning and optimization phases of a cellular mobile network (from the fourth generation onwards) easier and faster. Thanks to SON algorithms such as CCO - operating on cells' tunable parameters such as cell's antenna(s) electrical tilt, cell's transmission power and cell's antenna(s) azimuth, just to mention a few - it is possible to improve the performance, for example in terms of user throughput and/or carried traffic, also through continuous closed-loop optimization.

Belonging to the SON paradigm are also the so-called "self-healing algorithms", which act when some devices of the mobile communications network go into temporarily fault, and "self configuration algorithms", adopted to automatically perform the configuration of new devices added to the network.

Basically, there are two fundamental types of SON: the "Centralized SON" ("C-SON") which work on large numbers of cells with centralized logic, and the "Distributed SON" ("D-SON") which, on the other hand, operate at level of the single network node (e.g., single cell) for local optimization purposes.

The CCO problem for a cellular mobile communications network is typically hard. As mentioned above, there are several cell's parameters that may be tuned to improve Coverage and Capacity on fields. Considering, for sake of simplicity, only antennas' electrical tilt configuration (a similar reasoning also applies to other cells' tunable parameters such as power transmission, antenna azimuth or a combination of the above), and focusing on a delimited geographic area where a number C of network cells can be tuned, each of them with a number T of discretized electrical tilts to that can be selected, the possible solution space is:

$$|\boldsymbol{tilts}|^{|cells|} = |T|^{|C|}$$

This constitutes an *NP*-hard combinatorial optimization problem where the number of admissible configurations grows exponentially with the number *C* of cells in consideration. For the sake of simplicity, assuming that all the network cells have the same number *T* = 5 of possible electrical tilts (more generally, each network cell might have a different number of permissible electrical tilts):

13 cells with 5 tilts means $5^{13} \cong 1.2$ billions of possible configurations, and
16 cells with 5 tilt means $5^{16} \cong 152$ billions of possible configurations.

Such solution space is prohibitively too large to be systematically explored by any optimization algorithm, and therefore there is the need for a smart and economical approach capable of finding an optimal (or quasi-optimal) solution by only exploring a subset of all solutions in the space.

"Reinforcement Learning" ("RL") is a discipline of Artificial Intelligence and Machine Learning that studies algorithms for achieving a defined goal that works with continuous interaction with the target environment and receives feedbacks ("rewards") from it.

US 2013/122885 A1 discloses a parameter setting apparatus that includes a memory, and a processor that executes a procedure in the memory, the procedure including, selecting and executing one of a plurality of optimization operations to optimize a control parameter of a mobile communication network in accordance with a common value function, in response to a state variable in each of a plurality of different areas in the mobile communication network, the common value function determining an action value of each optimization operation responsive to the state variable of the mobile communication network, determining a reward responsive to the state variable in each of the plurality of areas, and performing reinforcement learning to update the common value function in response to the reward determined on each area. A SON application performs Coverage and Capacity Optimization (CCO) to optimize setting of the tilt and azimuth of an antenna of the base station, and transmitting power of the base station. The SON application performs energy saving (ES) to optimize the power on and power off control of a radiowave transmitter of the cell. A model of the reinforcement learning is mentioned, the reinforcement learning being a process of an agent that interactively learns from the environment, and improves a policy to maximize a total amount of finally gained reward. An example of the reinforcement learning is Q-Learning. The reinforcement learning is applied to the learning of a startup process of the SON application by a SON controller. When the reinforcement learning is applied to the SON controller, one state, and one agent are arranged in a system including at least one cell, and the agent selects one of the SON applications as an action. The state is a combination of discretized values of state components. For example, the state components may include cell-edge throughput, cell throughput, cell-edge packet transfer efficiency, cell mean packet transfer efficiency, cell-edge interference level, cell mean interference level, call success rate, lost-call rate, radio resource usage rate, mobile station distribution, energy saving mode, and adjacent cell load. The reward is determined by weighting the reward components and scalarizing the weighted reward components: cell throughput, call success rate, lost-call rate, radio resource usage rate, and load unbalance rate.

Nikolay Dandanov et al, "Dynamic Self-Optimization of the Antenna Tilt for Best Trade-off Between Coverage and Capacity in Mobile Networks", Wireless Personal Communications volume 92, pages 251-278 (2017) propose a method for capacity and coverage optimization using base station antenna electrical tilt in mobile networks. The solution is based on the application of reinforcement learning. A learning algorithm for automated antenna tilting is developed.

WO 2021/045225 A2 discloses techniques of deep reinforcement learning (RL) applied to the problem of coverage and capacity optimisation (CCO) in wireless networks, motivated by the idea that the type of combinatorial optimisation problems encountered in wireless networks are somewhat analogous to strategy games, for which deep RL has already proven to be an effective approach. A computer simulation of a small wireless network is used to generate synthetic data to train a deep Q network (DQN), and evaluate the performance of the DQN with further simulations. The performance of the DQN is compared with a conventional model-based approach. The results show that the DQN achieves slightly better performance than the conventional method, without the need for an explicit model of the environment. The performance is shown to be further improved by using the DQN within a search algorithm.

CN 109946673 A discloses a networked radar node selection method based on Monte Carlo tree search and mainly solves the problems that data acquisition quantity and signal processing pressure are too large and node resources are wasted due to the fact that resources are not screened in the prior art. The implementation scheme is as follows: 1) determining selection input parameters and defining properties of tree nodes in a Monte Carlo search tree; 2) constructing a Monte Carlo search tree according to input parameters and node properties to obtain a group of selection schemes; 3) calculating performance of the obtained selection schemes and modifying properties of all accessed nodes in the search; 4) judging whether selection ends or not according to modified node properties; 5) if no, updating starting root nodes, and returning to 2). By screening of existing resources, the data acquisition quantity and signal processing pressure are reduced, node resource waste is avoided, spatial gain loss is reduced, and the method can be applied to screening of resources in logistics and communication networks.

In respect of US 2013/122885 A1, the Applicant observes that it proposes a method for CCO in the SON context using a model-free Reinforcement Learning approach, and cannot be applied with accurate network simulators (like those network simulators that simulate the propagation of radio signals through a territory taking into account data describing the territory, like natural orography, presence of human artefacts - buildings and so on - , presence of trees etc., of the type used during the planning phase of a mobile communications network) that, being accurate, are relatively slow, requiring times of the order of minutes to run the simulation of a single network configuration. A model-free RL approach can work with fast, but not accurate, network simulators.

Similar considerations apply to the work of Nikolay Dandanov et al: also in this case, direct (model-free) Reinforcement Learning approaches are proposed which require a very fast (and thus inherently not accurate) network simulator, able to run a simulation of a network configuration in times that are not compatible with the execution times of accurate network simulators of the kind discussed a few lines above.

The Applicant have tackled the problem of devising an improved method and system for CCO in a SON mobile communications network.

SUMMARY

According to an aspect of the present disclosure, there is provided a method, implemented by a data processing system, of adjusting modifiable parameters of network cells of a self-organizing cellular mobile communications network.

The method according to the present disclosure comprises identifying a geographic area of interest covered by the mobile communications network, by classifying network cells covering the geographic area of interest in a first class of cells having modifiable parameters that are modifiable by the self-organizing network, and a second class of cells in the neighbourhood of the cells of the first class and whose parameters are not modifiable.

The method according to the present disclosure further comprises:

- retrieving a current configuration of network cells currently deployed on field, the current configuration of network cells including, for at least some of the network cells, modifiable parameters;
- starting from the retrieved current configuration of the network cells, exploring different configurations of the network cells, each different configuration of the network cells differing from the retrieved current configuration of the network cells and from other different configurations of the network cells by a change in the value of at least one of the modifiable parameters of at least one network cell, and
- evaluating the explored different configurations of the network cells.

Exploring different configurations of the network cells comprises iterating the following steps:

- building a search tree in which each node of the search tree corresponds to a respective different configuration of the network cells, said building a search tree comprising:

  - selecting a path of nodes of the search tree from a search tree root node to a search tree leaf node, wherein the nodes in the path are selected by means of a node selection policy;
  - expanding the search tree by identifying at least two new tree child nodes in respect of the search tree leaf node;
  - assigning to each new tree child node a respective child node value, wherein said assigning values to the new tree child nodes comprises:

    - predicting, by means of a machine learning model, values of network performance indicators corresponding to the different configurations of network cells that corresponds to each of the new tree child nodes, and
    - calculating values of a reward function in respect of the predicted values of the network performance indicators;

  - selecting, among the new tree child nodes, at least one new tree child node according to a ranking of the calculated values of the new tree child nodes;
  - subjecting to simulation by a network simulator the selected at least one new tree child node for obtaining simulated values of the network performance indicators corresponding to the different configuration of network cells that corresponds to the selected at least one new tree child node;
  - calculating values of the reward function in respect of the simulated values of the network performance indicators;
  - updating a respective node information of the selected at least one new tree child node and of the search tree nodes back along the path from the selected at least one new tree child node to the search tree root node;
  - based on the calculated values of the reward function, assessing a goodness of the different configuration of network cells corresponding to the selected at least one new tree child node compared to the configuration of network cells corresponding to the search tree root node, and
  - when a suitable goodness is assessed for the al least one new tree child node, terminating said iterating and automatically deploying on field a new configuration of network cells by modifying one or more of the modifiable parameters of network cells.

In a preferred embodiment of the present disclosure, said node selection policy is based on an Upper Confidence Bound - UCB - criterion.

Updating a respective node information may comprise updating a node average value and a node visit count, said node average value being calculated by averaging the calculated values of the reward function with the previously calculated reward function values in respect of the node.

In embodiments of the present disclosure, said network performance indicators comprise at least one of the following indicators: number of overtarget cells that are experiencing a traffic load higher than a predetermined threshold traffic load; total cell traffic that exceeds a predetermined overtarget total traffic threshold; throughput guaranteed by the cells, and throughput offered to users of the cellular mobile communications network.

Said reward function can be a linear combination of two or more of said network performance indicators.

Preferably, said network simulator is a simulator of the type used in a planning phase of mobile communications network, configured to simulate propagations of radio signals taking into account a description of the geographic area covered by the network cells.

This type of network simulator is very accurate and the calculated values of the network performance indicators are very reliable.

Advantageously, said exploring and evaluating different configurations of the network cells are performed off-line in background, while the mobile communications network continues operating according to the current configuration of network cells.

In this way, the regular operation of the mobile communications network is not affected while finding a new, optimized network configuration.

In embodiments, said exploring different configurations of the network cells comprises, at each iteration or at least every predetermined number of iterations:

- building the search tree by selecting as a new search tree root node one of the new tree child nodes identified in previous iterations and which, based on the calculated values of the reward function in respect of the simulated values of the network performance indicators, has an assessed goodness higher than a goodness of the previous search tree root node selected in previous iterations.

The modifiable parameters of network cells may comprise one or more of: cell transmission power, electrical tilt of the cell antenna(s), azimuth of the cell antenna(s), parameters affecting a radiation diagram and a power spatial distribution. The modifiable parameters of network cells may include parameters controlling radiation patterns for active antennas.

The machine learning model can comprise a regressor having a loss function selected among: mean squared error, mean absolute error, Huber loss, quantile loss.

According to another aspect of the present disclosure, a data processing system is provided, configured for automatically adjusting modifiable parameters of network cells of a self-organizing cellular mobile communications network, the system comprising a self organizing network module comprising a capacity and coverage optimization module, wherein the capacity and coverage optimization module is configured to execute the method of the previous aspect of the present disclosure.

The method and system disclosed herein are able of finding an optimal (or sub-optimal) solution to the CCO problem just exploring (i.e., simulating by means of an accurate network simulator) few of the very vast number of possible solutions. Thanks to this feature, the method and system here disclosed can therefore be applied to optimize mobile communications networks with a training phase that does not require real-time interactions with the environment (i.e., with the mobile network deployed and operating on the field) or real-time interactions with a very accurate and fast network simulator (accurate network simulators are inherently "slow"), but can achieve its goal even if interacting with an accurate offline simulator.

Brief description of the drawings

Features and advantages of the solution here disclosed, including those mentioned in the foregoing, will appear more clearly by reading the following detailed description of exemplary and non-limitative embodiments. For a better intelligibility, the following description should be read making reference to the annexed drawings, wherein:

Fig. 1 is a pictorial view of a geographic area of interest covered by cells of a SON mobile network whose parameters are to be tuned for CCO;

Fig. 2 schematically depicts an exemplary cell parameter to be tuned for CCO, particularly the electrical tilt of a cell's antenna;

Fig. 3 is an overview, at the level of logical modules, of a system for CCO according to an embodiment of the solution disclosed herein;

Fig. 4A pictorially shows the operation of a standard Monte Carlo Tree Search algorithm;

Figs. 4B and 4C pictorially show a detail of two phases of the standard Monte Carlo Tree Search algorithm;

Fig. 5 pictorially shows a Tree Search algorithm according to the solution disclosed herein, and

Fig. 6 is a simplified flowchart of a method according to an embodiment of the present disclosure.

Detailed description of exemplary embodiments

The disclosure in this document proposes a method and a related system for CCO of a cellular mobile communications network ("mobile network"), particularly a 4G, 5G or future generations mobile communications networks adopting the SON paradigm.

The disclosed method and system can be applied to improve network performance in a geographic area covered by the mobile network.

Advantageously, to address the CCO problem, a specific geographic area 105, covered by the mobile network, where the optimization of the network is needed or desired to be performed, is defined. The geographic area **105** (from now on also referred to as "geographic area of interest") can be chosen taking into consideration several "Key Performance Indicators" ("KPIs", that are measures of network performance at the network service level, providing the mobile operator with data indicative of the performance of the mobile network), which the mobile network operator wishes to improve to provide better services to mobile network users. Such KPIs may include, but are not limited to:

- the number of "overtarget cells" (number that should be minimized, because overtarget cells are network cells experiencing a high traffic load that causes a reduction in user throughput),
- the total cell traffic that exceeds an overtarget threshold, for example set by regulatory standards (that should be minimized for similar reasons),
- the throughput guaranteed by the cells (to be maximized in order to improve the interferential conditions and therefore the total capacity of the cell / network)
- the throughput offered to mobile users (to be maximized in order to improve the quality of service / quality of experience of the mobile network users).

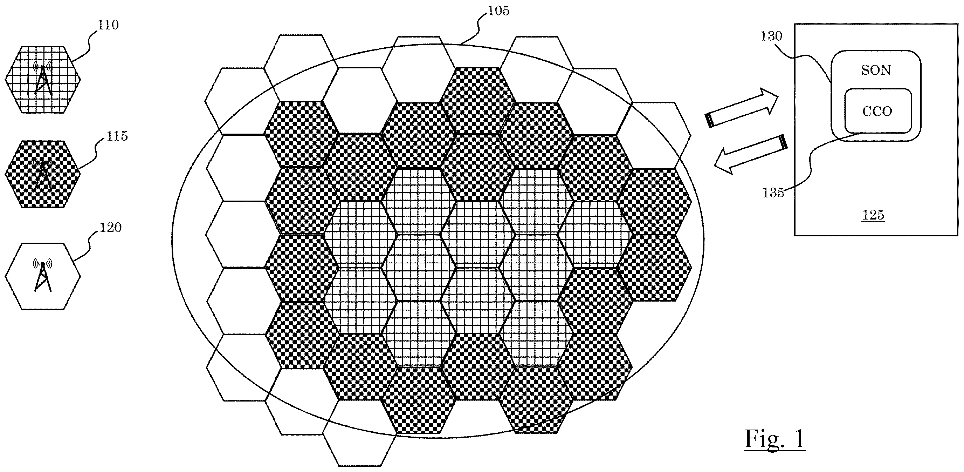

Once the geographic area of interest **105** is defined, the network cells on such area can be conveniently divided into two sets, as schematized in **Fig. 1**, for the formulation of the CCO problem:

1. a set of "Core cells" **110** to be optimized (by changing - tuning, adjusting - one or more of their configurable parameters, e.g., antenna(s) electrical tilt, antenna(s) azimuth, transmission power);

2. a set of "1st Tier cells" **115**, in the neighbourhood of the Core cells **110**, that cannot be modified but are nonetheless affected (interfered) by the Core cells **110** and can affect (interfere with) them. Even if the 1st Tier cells **115** do not change their configuration (e.g., antenna(s) electrical tilt) in the course of the optimization, their contribution (in terms of KPIs, as disclosed later on) appears in the optimization function that will be defined for the optimization problem (as discussed later on). The set of the 1st Tier cells **115** includes all the network cells that interfere with and/or are interfered by the Core cells **110**.

Preferably, a set of "2nd Tier cells" **120** is also considered, the 2nd Tier cells **120** being cells in the neighbourhood of the 1st Tier cells **115** and that cannot be modified and are not affected by the Core cells **110**. The 2nd Tier cells are used to create a boundary for the correct calculations in the network simulator. The 2nd Tier cells are taken into consideration for delimiting a best server area of the 1st Tier cells **115**.

Reference numeral **125** denotes a mobile network monitor and configurator system, including a data processing system comprising a SON module **130** and, within the SON module **130**, a CCO module **135**. The CCO module **135** is a module configured to perform a CCO of the mobile network. The SON module **130** is a module configured to dynamically configure (modify a current configuration deployed on the field) the network cells, particularly based on the results of the optimization performed by the CCO module.

The mobile network optimization procedure is performed by the CCO module **135** on the (cells of the) selected area of interest **105**, and is directed to identify a better ("optimized") configuration of the tunable parameters of the Core cells **110** in the area of interest **105**. Once the optimization procedure is completed, the SON module **130** deploys changes of the network configuration on field (modifying the values of the tunable parameters of the Core cells **110**, through SON Application Programming Interfaces - "APIs" - that allow remote software configuration of cells' parameters, e.g. antennas' electrical tilts).

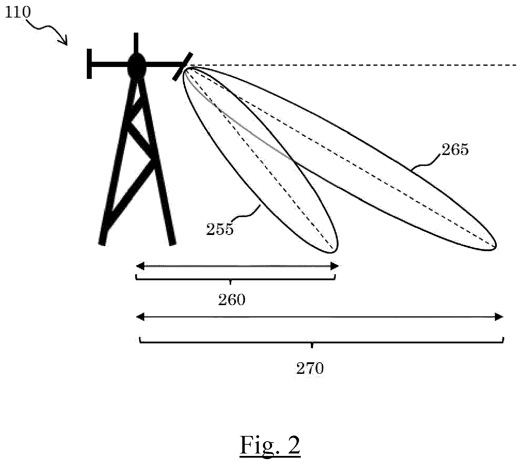

Considering, as an example of configurable parameter of the Core cells **110**, the electrical tilts of the Core cells' antennas, **Fig. 2** helps to clarify that by changing the tilt of a cell antenna, network performance indicators, such as capacity, coverage and interference, are affected. In particular, a higher tilt **255** reduces the covered area ("service area") **260**, increases the cell capacity dedicated to each user, and reduces the interference; conversely, a lower antenna tilt **265** increases the service area **270**, may reduce the capacity dedicated to each user, and can increase the interference.

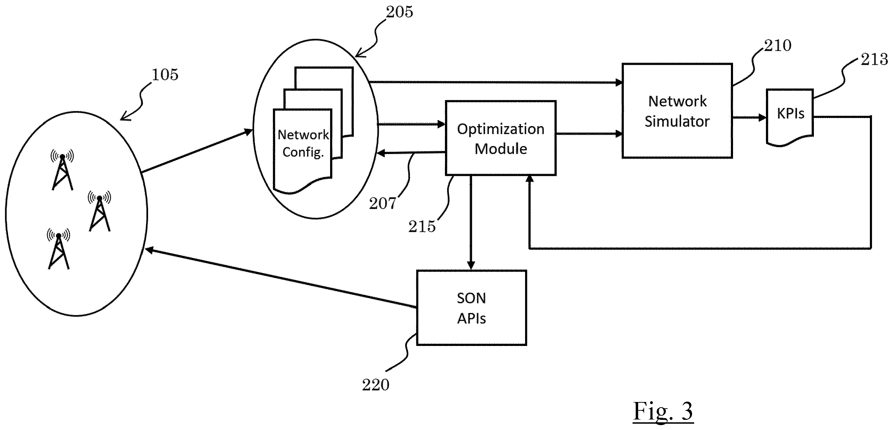

**Fig. 3** depicts the logical components of the modules in the network optimization system (CCO module **135**).

The logical modules comprise network configurations modules **205**, a network simulator module **210**, an optimization module **215**. Reference numeral **220** denotes SON APIs that allow remote software configuration of cells' parameters (e.g., antennas' electrical tilts) once an optimized configuration is found.

*Network configurations modules **205**:*

Since the aim of the optimization is to provide a new mobile network configuration that improves performance for mobile users, a set of parameters that describe a generic network configuration should be defined, so that different network configurations can be tested (by the network simulator **210**, configured to run offline with respect to the normal operation of the mobile network, as discussed shortly hereafter) and then, once the best network configuration is found and selected, it is deployed on field (by the SON module **130**). Such network configurations will take into consideration values of the parameters coming from the field (e.g., number of average users served by a certain network cell) as well as values of parameters **207** that will be proposed by the optimization module and that refer to cells' settings that can be changed (e.g., antenna tilt).

The set of parameters that are comprised in a generic network configuration can also include parameters that are not under the control of, and thus cannot be optimized by, the SON module **130**, such as for example the geographic position of the cells' transceiver stations, the height of the trellises of the cells' antennas, possible losses of the electrical cables, which affect the electromagnetic coverage of the area of interest 105 by the mobile network cells.

Thus, the network configurations modules **205** include a current network configuration, retrieved from the field, i.e., from the cells of the selected area of interest **105**, comprising a current configuration of the Core cells **110**, of the 1st Tier cells **115** and of the 2nd Tier cells **120**.

As the optimization module **215** operates, new network configurations are added to the network configurations modules **205**, each new network configuration comprising different values for the tunable parameters of the Core cells **110** (while the parameters of the 1st Tier cells **115** and of the 2nd Tier cells **120** are unchanged, like other parameters that are out of the control of the SON module **130**).

Two generic network configurations in the network configurations modules **205** differ from each other in respect of the value of at least one of the tunable parameters of at least one of the Core cells **110**. In particular, two generic different network configurations differ from each other in respect of the value of one of the tunable parameters (e.g., antenna electrical tilt, or azimuth, or transmission power) of one of the Core cells **110**.

*Network simulator module **210**:*

An example of a network simulation tool is described, e.g., in EP1329120B1, in the name of the same Applicant hereto. Since the network optimization problem (CCO problem) to be solved has a huge number of potential candidate solutions to be explored and some solutions are worse than the current network configuration running on field, the optimization process is advantageously run offline (not to impact the operation of the mobile network) and its results are deployed on field, i.e., applied to the Core cells **110** of the area of interest **105** only once the results of the optimization process are proven to improve network performance. For this reason, the network simulator module **210** is configured and employed to calculate the network performance indicators (KPIs **213**), which are then aggregated by the optimization module **215** into the optimization function, for different configurations of the network cells as proposed by the algorithm running in the optimization module **215**. The network simulator module **210** is configured to take as input network configuration parameters provided by the network configurations modules **205** and to return and submit to the optimization module **215** the KPIs **213** needed for calculating the optimization function of a given network configuration. Network configurations **205** will consider both on-field network KPIs, i.e., values of network performance parameters indicative of the network performance deriving from the network configuration currently deployed on the field, and settings proposed by the optimization module (as schematized by the feedback line **207**).

*KPIs for optimization function **213**:*

The optimization function $F$ (in the following also referred to as "reward function") should be analytically formulated so that the CCO algorithm running in the optimization module **215** is able to compare and rank (in terms of "goodness") the network configurations according to their respective reward values.

The optimization function $F$ can be defined using different network performance indicative parameters or indicators, KPIs **213**, as long as they are available from the offline simulations run by the network simulator module **210**, so that the CCO algorithm executed by the optimization module **215** has all the data necessary to perform offline optimization and find the best network configuration to be deployed on field.

For example, the optimization function $F$ can be a function of network performance indicators (KPIs **213**) such as total network traffic, number of overtarget cells, user average throughput, cell average throughput, albeit other network performance indicators may be taken into consideration as well.

In one embodiment of the present disclosure, the reward function $F(c)$ for the generic configuration c of cells' parameters - e.g., antennas' electrical tilt - to be evaluated strives to maximize a linear combination of the average cell throughput $Thr_{cell}(c)$, the average user throughput $Thr_{user}(c)$, and at the same time minimize the total cell traffic that exceeds an overtarget threshold $OT_{traffic}(c)$, for example set by regulatory standards. Such maximization objective is constrained such that the total network traffic $Traffic(c)$ of the proposed solution to the CCO problem is greater than or equal to the total network traffic $Traffic(reference)$ in the currently deployed network configuration. In formulas:

$$\mathcal{F}(c) = W_{cell} \cdot Thr_{cell}(c) + W_{user} \cdot Thr_{user}(c) - W_{OT} \cdot OT_{traffic}(c)$$

subject to:

$$Traffic(c) \geq Traffic(reference)$$

where $W_{cell}$, $W_{user}$ and $W_{OT}$ are weights of the linear combination.

As mentioned in the foregoing, only the KPIs of the Core cells **110** and of the 1st Tier cells **115** enter into the calculation of the reward function $F(c)$.

*Optimization module **215**:*

The optimization module **215** is configured to execute an optimization algorithm to find the best solution to the CCO problem (i.e., a new configuration of the tunable parameters of the Core cells **110** that improves the network performance).

As described in the foregoing, the CCO is a combinatorial optimization problem. The space of possible configurations grows exponentially with the number of cells and admissible values of cells' tunable parameters, e.g., antennas' electrical tilt ranges, and as such it belongs to the class of NP-hard problems in computer science parlance.

Exact solutions cannot be guaranteed by any tractable optimization algorithm, therefore it becomes paramount to devise an optimization algorithm capable of finding, in a limited allotted time budget, an approximate solution that is sufficiently close to the theoretical optimal.

Optimization algorithms can be ranked according to their ability to find the best approximate solution to an optimization problem with the fewer number of optimization steps, or, equivalently, according to the best found solution given a same number of allotted optimization steps. Such ranking is important since finding a solution to a CCO problem is a highly expensive procedure.

Known approaches to the CCO problem can be divided into two broad categories/classes.

A first category comprises approaches that optimize directly in close loop on real hardware/software of the network cell sites. These methods typically employ some variant of model-free Reinforcement Learning (RL), or "Model Predictive Control" ("MPC"). The Applicant has observed that any approach that is supposed to optimize/learn directly on field is fraught with dangerous and undesirable outcomes. As already mentioned, the optimization/learning process may require many steps, and in this phase the network configurations explored by the optimization algorithm are frequently far from being optimal. As a consequence, the services offered by a mobile network adopting such system would be severely compromised.

A second category of approaches calls for algorithms that are optimized for interacting with a simulator (network simulator) that accurately mimics the real-world scenario. Optimizing/learning with a simulator circumvents the risks/drawbacks of the first category of methods. When the optimization process is complete, the final, best configuration found is deployed on the field with immediate benefits henceforth. Indeed, the found solution will be as advantageous as the accuracy of the simulator. If the simulation carried out by the simulator is not accurate enough, the configuration found by the optimizer will be inadequate in the real deployment, due to the divergent state of affair. However, developing a very accurate simulator is a non-trivial and paramount software endeavour. The simulator needs to have knowledge of the physical propagation of radio signals, interference between sources, absorption by physical obstacles, bouncing and reflection, etc. In addition, the orography of the simulated geographic area needs to be thoroughly represented (not only the natural geography of mounts and valleys, but also all the buildings, streets and artificial/natural structures that influence radio propagation). Such an accurate simulator will have taxing execution costs: even with modern data processing hardware/software, evaluating a single cell configuration might take several seconds. Such performance concerns are the very reason why the optimization algorithm needs to be very efficient in finding the best possible solution in as few optimization steps as possible.

Many prior art documents frame the CCO problem as a Markov Decision Process (MDP) and, in so doing, they tap into the vast knowledge base of RL algorithms. The reason can be that finding an optimal solution (optimal network configuration) for a CCO problem can be thought of as a sequence of actions, each altering a single cell parameter in an ensemble of cell parameters of several cells in a geographic area of interest, all cells (and their parameters) affecting each other in some way. For example, the cell parameters can be the antennas' tilts of a number of cell deployed in a geographic area.

Standard RL algorithms are called "model-free", in that they learn to directly optimize a reward function without the need for an explicit representation of the state of the world, or "domain knowledge". Two popular sub-categories of model-free RL algorithms are "Q-learning", where the objective is to learn the value function of any possible state/action pair, and "Policy Gradient" methods that learn to optimize the best action in any one of the feasible states. Model-free algorithms are very general and can be applied to any problem that can be cast as an MDP problem. Unfortunately, their generality comes at the cost of not being sample-efficient, meaning that they need a conspicuously high number of steps to learn and converge to any meaningful solution. Nowadays, state-of-the-art model-free RL algorithms may require millions of learning steps, and even billions are not unheard of for non-trivial problems.

RL algorithms of another category are called "model-based" in that they exploit the knowledge of the environment (aka the "world" to be optimized, or state of affair). Endowed with such knowledge of the environment, model-based RL algorithms are much more sample-efficient than model-free algorithms. They are called "model-based" because the knowledge of the environment is embedded in a sufficient representation thereof, i.e., a model of the environment. The advantages of the model of the environment come at the cost of making these algorithms less general and more complex since they need an extra component that learns the model besides the policy that decides the best action in a given state.

One extreme of model-based RL algorithms are those algorithms that directly exploit the simulator as their model. They are called "planning algorithms" in that they represent the optimization problem as a planning problem and build a search tree where each node represents a feasible state, and every edge is a valid action that modifies the state leading to its attached neighbour. The root of the search tree is the start configuration, and the leaves of the search tree are all possible configurations reachable from the root. The aim of the planning algorithm is to find a path from the root to (an approximate) optimal leaf in as few steps as possible. As known to those skilled in the art, a leaf node is a node that does not have child nodes that are below it in the search tree, considering the search tree as defined at a given time/stage.

A niche domain that has enjoyed the burgeoning of planning algorithms is the domain of strategic board games, like chess, go, shogi, etc. In these games the domain knowledge is complete and given by the board configurations and game rules. A match playout can be represented as a tree where every node is a board configuration, and an edge is the consequence of performing a valid move on the board. In the past there have been several planning algorithms for playing strategic games, notable mentions being A*, min-max, alpha-beta pruning, etc.

Since late 2000s the "Monte Carlo Tree Search" ("MCTS") algorithm (first devised in 2006) has become the state-of-the-art gold standard for this type of strategic games (Cameron B. Browne et al., "A Survey of Monte Carlo Tree Search Methods", IEEE Transactions on Computational Intelligence and AI in Games, Vol. 4, No. 1, March 2012; Michael C. Fu, "Monte Carlo Tree Search: a Tutorial", Proceedings of the 2018 Winter Simulation Conference, Gothenburg Sweden, ACM). In that context, MCTS is used to solve the "game tree".

At the core of the MCTS algorithm there is a node selection policy that is based on the concept of "Upper Confidence Bound" ("UCB") borrowed from the well-established literature of "Multi-Armed Bandit" ("MAB") problems. MAB problem solutions strike a balance between the exploitation/exploration trade-off of RL algorithms. On the one hand, moves that have produced high rewards should be favoured, thereby exploiting what has been learned thus far. On the other hand, rarely sampled moves should also be favoured because they might lead to promising states and better final rewards. This exploitation/exploration trade-off is exemplified in the following UCB formula that is a mathematical embodiment of the concept "optimism in the face of uncertainty":

$$UCB_t(a) = argmax_{a \in \mathcal{A}} \left( Q_t(a) + c \sqrt{\frac{\ln(N_t)}{N_t(a)}} \right)$$

where $a$ denotes the generic move and $A$ denotes the set of all possible moves.

The UCB formula ranks all the moves as a linear sum of two terms. The first term is the average value of the move $a$, $Q_t(a)$. The second term favours moves that have not been explored enough. The numerator in the square root is the logarithm of the total number of moves thus far, $N_t$, while the denominator $N_t(a)$ is the number of times move $a$ has been selected. Moves with a low $N_t(a)$ count have a higher UCB score and therefore are ranked higher in the selection of the move.

MAB problems constitute a simplified niche of the broader RL discipline where there is no MDP, in that they lack the concept of state, or, said equivalently, there is only one single state. MCTS extends the concept of UCB to a sequence of states, where each node in the search tree represents a new UCB sub-problem (also referred to as "Upper Confidence for Trees" or "UCT"). In this framework, the value of a move - which determines the value of a node - could indicate the information (being a single value, or a series of values) in a node of the search tree that accounts for the goodness of the overall move from that specific node to the leaf node.

The application of MCTS to games is based on many playouts, also called "roll-outs". In each playout, the game is played out to the very end of the game by selecting moves at random. The final game result of each playout is then used to weight the nodes in the game tree so that better nodes are more likely to be chosen in future playouts.

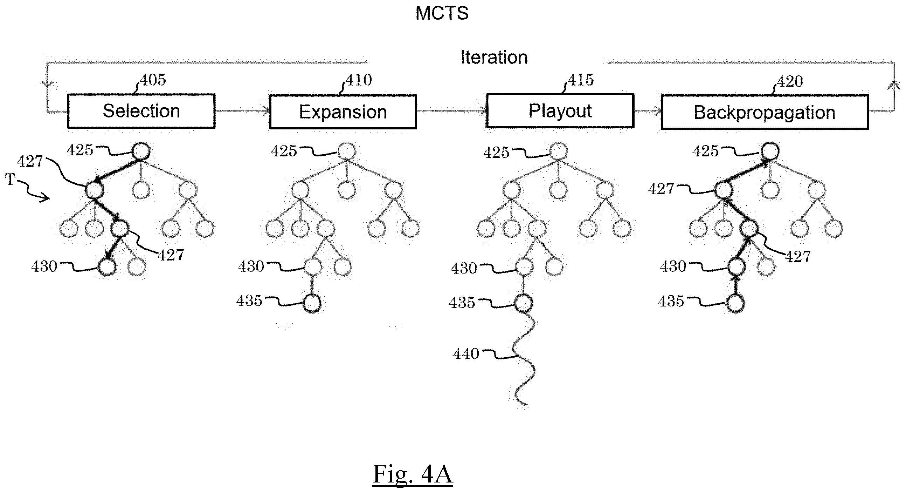

In greater detail, the MCTS algorithm iteratively builds a search tree **T** until a given computational budget is reached. Four steps are applied per search iteration, as schematized in **Fig. 4A**:

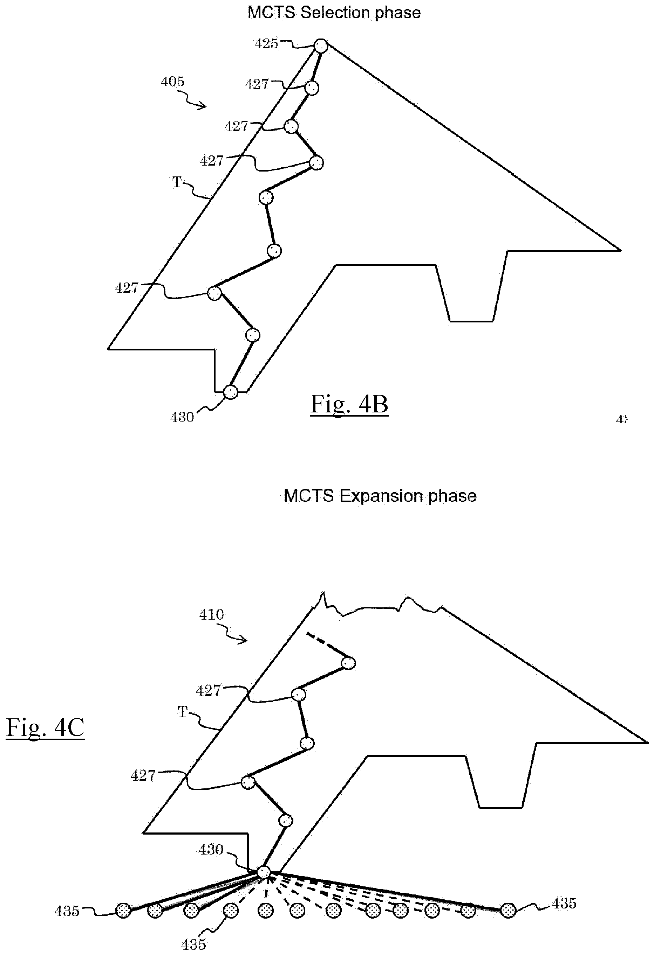

1. *Selection* phase **405**: starting from the tree root node **425,** a path (depicted in bold lines in **Fig. 4A**) is followed (by recursively applying a node selection policy) through child nodes **427** of the search tree **T** until a tree leaf node **430** is reached. In this phase each child node **427** below the root node **425** is selected by applying the UCB formula. The *Selection* phase is schematized in **Fig. 4B**;

2. *Expansion* phase **410**: the leaf node **430** reached in the *Selection* phase **405** is expanded by randomly selecting one (or more, usually several, depending on the allowed "moves" from the leaf node **430**) new child node(s) **435** to add to the search tree **T**, according to the valid possible actions in that state (i.e., in the state of the leaf node **430**). The *Expansion* phase **410** of the standard MCTS algorithm is schematized in **Fig. 4C**;

3. *Playout* (or *Simulation* or *Rollout*) phase **415**: a random rollout **440** (choosing random moves out from the allowed moves) from the newly added child node(s) **435** (added during the *Expansion* phase) is simulated until a terminal state is reached (i.e., a game over state is reached), and

4. *Backpropagation* phase **420**: this is the learning phase of the MCTS algorithm. The value of the terminal state (e.g., in games the value can be a numerical representation of the game outcome: "win" or "loss" - e.g., "+1" or "-1" - reached during the *Playout* phase **420** is backed up in the path through the visited child nodes **427** (in bold lines in **Fig. 4A**) to update their statistics, namely their average value $Q_t(a)$ and visit count $N_t(a)$.

The *Selection* phase **405** is deterministic and completely defined by the UCB formula policy: starting from the root node **425**, the child nodes in the path are determined based on the UCB formula. Conversely, the *Expansion* and *Playout* phases **410** and **415** are random phases, and are the ones that provide the moniker "Monte Carlo" to the MCTS algorithm.

Since its birth, the MCTS algorithm has become the de facto algorithm for solving strategic board games. Its latest surge into notoriety was brought to media stardom in 2016 by the exploits of DeepMind's AlphaGo and then Alpha-Zero (https://deepmind.com/research/case-studies/alphago-the-story-so-far).

The MCTS algorithm is very sample-efficient and effective in founding optimal moves. Yet these virtues are somehow curbed by being a rather specialized, domain specific algorithm. The MCTS thrives if the problem can be thought of as a strategic board game, where states are game board configurations and actions are moves that alter such configurations.

According to the present disclosure, the Applicant has found that it is advantageous to cast the mobile network CCO problem as a strategic board game, in order to try to apply the MCTS approach to the solution of the CCO problem.

In one exemplary embodiment of the present disclosure, the parameters that specify a mobile network configuration are the electrical tilts of the antennas of the network cells in a geographic area of interest like the area of interest **105** in **Fig**. **1** (it is pointed out that antennas' electrical tilts are in the following considered, merely for the sake of simplicity, as the only tunable parameter of the network cells, but the present disclosure is not limited to antennas' electrical tilts, being advantageously applicable to additional or different cells' tunable parameters such as azimuth, power transmission and any other available parameter affecting radiation diagram and power spatial distribution, including but not limiting parameters controlling radiation patterns for active antennas).

In the CCO context, a "move" (= single alteration of one configurable parameter of one network cell) of the "game" (= optimal network configuration) is the modification of a single tunable parameter of the network cells, e.g., the electrical tilt of one network cell (referring back to **Fig. 1**, in the non-limitative example here discussed a "move" is the modification of the antenna electrical tilt of one of the Core cells **110** in the selected area of interest **105**, because by definition the Core cells **110** are the set of those cells whose parameters are assumed to be modifiable). Therefore, the valid "moves" at each time step t are the set of all antennas' electrical tilt ranges $\mathcal{T}_c$ of all Core cells $\mathcal{C}$:

$$moves_t = \bigcup_{c \in \mathcal{C}} \mathcal{T}_c$$

where $T_c$ denotes the admissible discrete values that the electrical tilt of the antenna of the generic Core cell *c* can assume. Due to regulatory or physical restrictions, the cells may not share the same electrical tilt ranges: different Core cells **110** may have different admissible values $T_c$.

The Applicant, in trying to cast the mobile network CCO problem as a strategic board game in order to try to apply the MCTS approach to the solution of the CCO problem, has found that there are however remarkable differences between the former and the latter.

One remarkable difference is that, differently from a strategic board game, in CCO (and other combinatorial optimization problems), there is not a single terminal, final configuration (there is not an end game), because any intermediary configuration represented by a node in the tree is a potential solution to the optimization problem.

Conveniently, the Applicant has devised significant modifications to the standard MCTS approach to substantially improve the performance of the method and system disclosed herein, and has found an optimization algorithm that albeit being inspired by the standard MCTS applied to strategic board games, is different therefrom in many important and noteworthy aspects.

Firstly, since, as mentioned, in CCO there is not a single final configuration that needs to be reached, a more pragmatic pursuit is to find a near optimal solution in as few steps as possible, due to the computational cost of running each simulation of a new proposed candidate network configuration. In fact, in MCTS, the playout in the *Playout* phase **415** consists of simulating a playout of the game by randomly sampling the "moves" to reach a terminal state, which is the "end of the game". In CCO there is not a real terminal state (i.e., there is no "end of the game") because any intermediate node is potentially valid (being a potentially valid configuration for the Core cells **110**). The Applicant has perceived that random sampling new configurations for the Core cells **110** and submitting them to the network simulator **210** (for simulating a playout) is a waste of expensive computational resources. This reasoning has led the Applicant to eliminate, in the optimization algorithm according to the present disclosure, the *Playout* phase **415** of the known MCTS algorithm.

Secondly, the present disclosure envisages the restart of the search tree whenever a new leaf node is found that has a better value of the reward function than the root. According to the present disclosure the algorithm starts a search tree using the best configuration found thus far at the root of the search tree. Then the algorithm proceeds by building the search tree and updating the values of the search tree nodes according to the *Selection, Expansion,* and *Backpropagation* phases. According to a preferred embodiment, when the value of (the reward function of) a new child node added to the search tree is higher than the root node's (reward function) value, the search is halted, the search tree is discarded, and a new search tree is started with the newly found best value node at its root. Restarting the search procedure from the best configuration found thus far has the effect of dramatically improving the search by pruning unfruitful search paths.

Thirdly, still according to the present disclosure, to further bolster optimization efficiency the tree search is augmented with a Machine Learning Model (MLM) that is trained on the network configurations that have been sampled and submitted to the network simulator. The MLM learns a model of the network simulator **210** that can be queried in lieu of the network simulator **210** (which, being very accurate is necessarily relatively slow) every time a new network configuration is to be evaluated. Differently from the standard MCTS, the MLM assigns values to the new child nodes added in the *Expansion* phase, as discussed in detail later on.

The Applicant has found that these differences represent substantial improvements to the standard MCTS approach for applying its logic to the solution of the CCO problem.

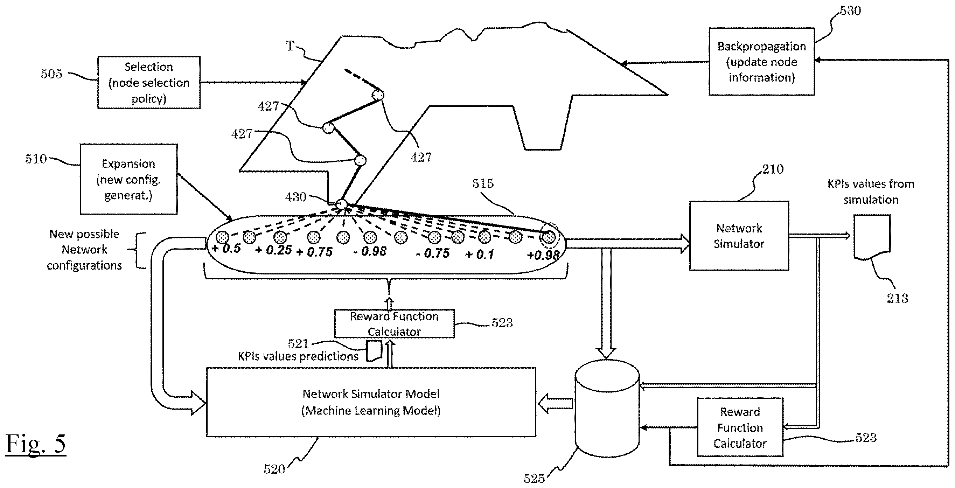

**Fig. 5** pictorially shows the structure of a tree search algorithm according to the solution here disclosed.

A *Selection* phase **505** drives the creation of a path of nodes (starting from a tree root node, not shown in the drawing) through the search tree **T**, selecting child nodes **427** by applying a node selection policy based on information in the nodes, until a tree leaf node **430** is reached. A preferred node selection policy is the one based on the UCB formula: in this case the information in the nodes, or node value, is represented by the average node value $Q_t(a)$ and by the visit count of the node. However, alternative node selection policies based on information in the nodes may be considered, for example the "epsilon greedy policy", the "Thompson sampling" policy or the "Gittins index" policy. In general, a preferred node selection policy should provide a trade-off between exploitation (i.e., favouring moves that have produced high rewards) and exploration (i.e., favouring rarely sampled moves because they might lead to promising states and better final rewards). In other words, a preferred node selection policy provides for a trade-off between exploitation, favouring nodes (i.e., network configurations) that have produced high rewards (in terms of value of the reward function, as discussed in greater detail later on), and exploration, favouring nodes (i.e., network configurations) rarely explored (because they might lead to promising states and better final rewards).

At the tree leaf node **430**, an *Expansion* phase **510** expands the search tree **T** by adding to the leaf node **430**, if available, one or more new child node/nodes, globally denoted **515**, according to all the valid actions in the state of the leaf node **430** (i.e., according to all network configurations obtained by modifying all possible configuration parameters one at a time, and corresponding to the leaf node **430**). There is a possibility that the tree leaf node is a terminal node, i.e., no child node exists from the tree leaf node **430**, all nodes reachable from tree leaf note **430** being already part of the search tree. In this case, the iteration is considered as completed.

If at least one child node is identified, a MLM module **520**, which (as described in greater detail in the following) is a model of the network simulator **210** seen as a black-box function, generates (i.e., predicts) the values of the network performance indicative parameters KPIs of the different network configurations corresponding to the added child nodes **515**. While the network simulator **210** is a model of the world that accurately models how the world works, the MLM module **520** does not model the world but rather mimics the operation of the network simulator **210** seen as a black box and predicting outputs in respect of given inputs. The predicted KPIs values generated by the MLM module **520** are approximations of the true values of the KPIs that would be calculated by the network simulator **210** should the latter run real simulations of the corresponding network configurations. The predicted KPIs values are used to estimate a value to each of the added child nodes **515**. The estimated values of the added child nodes **515** are calculated by applying (reward function calculator module **523**) the reward function F(c) using the predicted KPIs values:

$$\mathcal{F}(c) = W_{cell} \cdot Thr_{cell}(c) + W_{user} \cdot Thr_{user}(c) - W_{OT} \cdot OT_{traffic}(c)$$

subject to:

$$Traffic(c) \geq Traffic(reference)$$

For example, assuming that the value of the reward function *F(c)* can range from -1 to +1, the values estimated by the MLM module **520** for the added child nodes **515** can be "-0.98" ("really bad"), "-0.75" ("bad"), "+0.1" ("fair"), "+0.25" ("fairly good"), "+0.5" ("good"), "+0.75" ("very good") and "+0.98" ("super good"), as depicted in **Fig. 5**.

Then, (in the next *Selection* phase of the next iteration) only those added child nodes, among all the added child nodes **515**, having high (i.e., most promising) predicted values are selected and submitted to the network simulator **210** for the real simulation of the corresponding network configurations. The network simulator **210** runs the simulation and calculates the corresponding KPIs **213**. The simulated KPIs (i.e., the KPIs calculated by simulation) **213**, together with the value of the reward function *F(c)* calculated for them and the corresponding network configurations (reward function calculator module **523**), are stored in a database (a data cache) **525** which the MLM module **520** uses for its learning.

The KPIs values **213** calculated by the network simulator **210** are used to calculate (reward function calculator module **523**) the value of the reward function *F* for the simulated network configuration. The calculated value of the reward function *F* gives an indication of how good that "move" (i.e., that change to the network configuration; in the considered example, the change of the antenna tilt of one of the Core cells **110**) is, as a result of the simulation. The calculated value of the reward function *F* for the simulated network configuration is used in the *Backpropagation* phase (*Backpropagation* module **530**) to update the values of the nodes in the path from the child node **515** submitted to simulation up to the root node. In particular, in the preferred example using the UCB formula as a node selection policy, for each node **430**, **427** in the path from the simulated child node **515** up to the root node the corresponding average value $Q_t(a)$ is updated averaging the newly calculated value of the reward function F with the previous $Q_t(a)$ average value, and the visit count of the nodes in the path is increased.

According to the present disclosure, the MLM **520** is a regressor trained to predict the KPIs **213** that could be calculated and outputted by the network simulator **210** given the parameters that constitute a given network configuration. All the network configurations proposed by the tree search algorithm (*Selection* **505** and *Expansion* **510**) and submitted to simulation by the network simulator **210**, along with their respective KPIs value **213** computed by the network simulator **210**, are gathered and stored in a data cache (database **525**) used to train the MLM. At the very start of the search tree the data cache is empty. Gradually, as new network configurations are proposed and run in the network simulator **210**, new data are added to the data cache.

In an embodiment of the solution disclosed herein, the MLM **520** is retrained when a number *N* of new network configurations are gathered. Choosing *N* = 1 means that the MLM **520** is retrained whenever a single new network configuration is added to the cache. This extreme case may seem wasteful because retraining the model of the network simulator **210** comes at a computational cost. However, this cost is fully compensated by having the MLM **520** as updated and accurate as possible. In any case, nothing prevents from retraining the MLM **520** with a lower frequency.

The data used by the MLM **520** comprises input parameters that describe a certain network configuration submitted to the network simulator **210** and the corresponding KPIs **213** computed and provided in output by the network simulator **210**. As mentioned, at the very beginning the dataset in the database **525** is scarce and the accuracy of the trained model may not be very reliable, but as more data (i.e., more simulations of new network configurations found during the tree search and submitted to the network simulator **210**) is gathered and stored in the database **525** the MLM **520** will increase the accuracy of its predictions.

The MLM **520** may be implemented in a number of machine learning paradigms, such as "Random Forests", "Gradient Boosting Machines", "Gaussian Processes", "Support Vector Machines", "Artificial Neural Networks", etc.

Analogously, the loss function (or error function) for the regressor may be any one among known regression losses, such as mean squared error, mean absolute error, Huber loss, quantile loss, etc.

The regression task of the regressor may be framed to predict the reward function, or, advantageously, it may be framed as a multi-output regression task, where the objective is to predict the values of all the various KPIs that appear inside the reward function. This second approach produces more reliable results and is more amenable to adjustments and tuning of the weights that appear in the reward function.

The usefulness of the MLM **520** and its relationship with the search tree will be discussed in greater detail hereafter.

The purpose of the MLM **520** is to estimate, to predict the values of the KPIs **521** of network configurations that have not (yet) been simulated in the network simulator **210**. The MLM **520** predicts approximate values of the KPIs **521** for a certain network configuration, KPIs that would be computed and outputted by the network simulator **210** should a real simulation of that network configuration be run. The network simulator **210** requires complex and time-consuming calculations for obtaining the values of the KPIs **213**: conveniently, the KPIs values predictions **521** of the MLM **520** are orders of magnitude faster to compute, albeit less accurate.

The Applicant have devised a way to exploit the MLM **520** in symbiosis with the search tree (*Selection* **505**, *Expansion* **510** and *Backpropagation* **530**). In particular, the *Expansion* phase **510** in the tree search is augmented with the predictions of the KPIs values **521** made by the MLM **520** (and the corresponding reward function values calculated for the predicted KPIs values **521**).

In the *Expansion* phase **410** of the standard MCTS, the child nodes **435** added to a leaf node **430** of the search tree **T** have "undefined" values and their visit count is set to zero. This is because these newly added child nodes **435** have not been run in the simulator yet (i.e., no game has yet been played starting from such newly added child node **435**). When the next *Selection* phase **405** reaches these new child nodes **435**, they will all produce the same UCB value, and therefore any one of the new child nodes **435** can be picked randomly to break the tie. This means that, in standard MCTS, there is no informed selection of the child nodes **435**, any of the added child nodes **435** can be chosen because at this time there is no information that privileges one from the others.

Advantageously, in the algorithm according to the present disclosure, when new child nodes **515** are added to the tree during the *Expansion* phase **510**, rather than initializing their values as "unknown", they are initialized with the (value of the optimization function *F* calculated by the reward function calculator module **523** for the) predicted values of the KPIs **521** provided by the MLM **520**, and their visit count is set to one. Indeed, these KPIs values predictions **521** cannot be as accurate as the KPIs values **213** calculated by the network simulator **210**, but they are nonetheless sufficient to provide a reliable ranking among the values of such newly added child nodes **515**. This guarantees a considerable boost when the next *Selection* phase **505** reaches the same parent node. The values (e.g., the UCB values) of the child nodes **515** will not be the same; rather, the child node **515** with the highest predicted value (like the one encircled in dashed line in **Fig. 5**) is selected first. The selected child node **515** is then submitted to the network simulator **210** and its value (calculated by applying the reward function calculator **523** to the simulated KPIs values **213**) is updated in the *Backpropagation* phase **530**, and conveniently the MLM **520** is retrained with this new piece of data added to its training set.

The presence of the MLM **520** in the loop with the tree search algorithm greatly reduces the number of optimization steps, typically requiring one third of steps compared with the search without MLM (as in standard MCTS).

The algorithm described in the foregoing is a major departure from standard MCTS. In particular, all random (stochastic, "Monte-Carlo") elements have been suppressed: the *Playout* phase **415** of the standard MCTS has been removed, and the *Expansion* phase, that adds new child nodes (that in standard MCTS are selected randomly), has been enhanced with the prediction provided by the MLM, **520**, thereby rendering the next selection deterministic and guided by the predicted UCB values. The result is an algorithm that can be called "Model-Based Tree Search".

Once the optimal configuration has been chosen by the optimization system, it will be deployed on the field thanks to SON APIs that allow remote software configuration of cells' antennas.

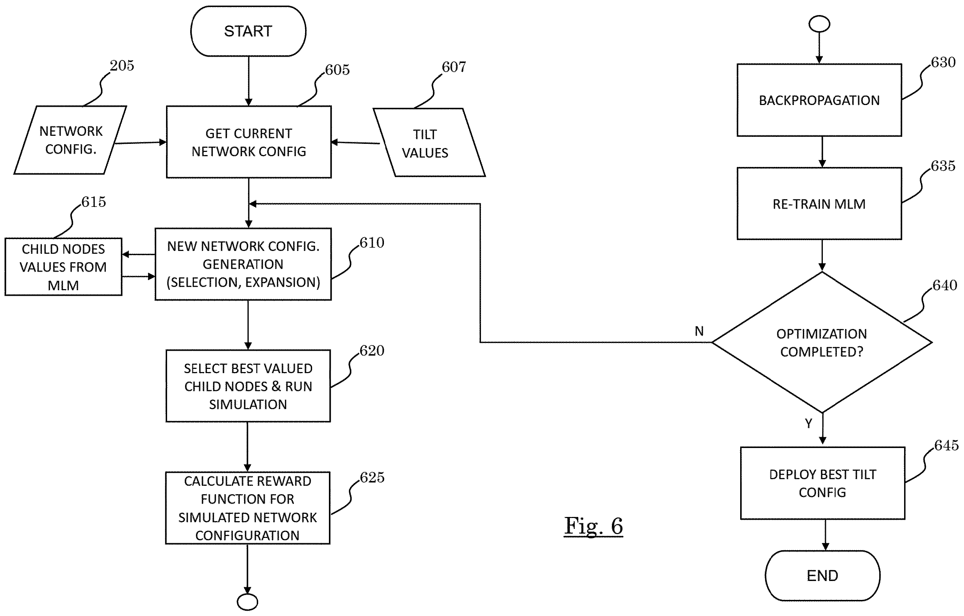

**Fig. 6** is a simplified flowchart of a method according to an embodiment of the present disclosure.

Initially, block **605**, the CCO module **135** obtains the current network configuration and the admissible values **607** of the Core cells **110** tunable parameters (e.g., electrical tilts of the cells' antennas).

Then, block **610**, the *Selection* phase **505** and the *Expansion* phase **510** are performed to generate - if available - new network configurations (new child nodes **515**). By interacting with the MLM **520** (and the reward function calculator **523**), values are attributed to the new child nodes **515** (block **615**), the attributed values being based on the predicted KPIs **521** predicted by the MLM **520**.

The best valued child node **515** (e.g., the child node shown encircled in dashed line in **Fig. 5**, having the exemplary predicted value 0.98) is selected and the corresponding new network configuration is submitted to simulation by the network simulator **210** (block **620**).

The network simulator **210** runs the simulation and generates simulated KPIs values **213**, which are used to calculate the value of the reward function *F* in respect of the simulated network configurations (block **625**).

Block **630** performs the *Backpropagation* phase **530** to update the average values $Q_t(a)$ of each visited node and its visit count.

Block **635** retrains the MLM **520** with the newly acquired data generated by the simulator.

Steps **610** through **635** are iterated (decision block **640**, exit branch **N**) until a suitable goodness is assessed for the al least one new tree child nodes, e.g., until the optimization module **215** assesses that no further improvements in the optimization are achieved, or until a predetermined number of iterations has been reached (decision block **640**, exit branch **Y**). For example, the iteration of steps **610** through **635** is terminated when the optimization module **215** assesses that, for a predetermined number of iterations (e.g., ten) no improvements in the value of the reward function are obtained. In an alternative embodiment, the iteration of steps **610** through **635** is terminated after a predetermined number of iterations, the predetermined number of iterations being defined case by case taking into account the specific situation of the self-organizing cellular mobile communications network such as, e.g., the number of cells and the range of values of the cell parameters.

The SON module **130** (SON APIs **220**) then deploys the found best configuration on field (block **645**).

## Claims

1. A method, implemented by a data processing system (**125**), of adjusting modifiable parameters of network cells (**110**) of a self-organizing cellular mobile communications network, comprising:

   - retrieving (**605**) a current configuration (**205**) of network cells (**110**, **115**) currently deployed on field, the current configuration of network cells including, for at least some of the network cells (**110**), modifiable parameters;
   - starting from the retrieved current configuration of the network cells, exploring (**610**, **620**) different configurations of the network cells, each different configuration of the network cells differing from the retrieved current configuration of the network cells and from other different configurations of the network cells by a change in the value of at least one of the modifiable parameters of at least one network cell;
   - evaluating (**625**) the explored different configurations of the network cells, wherein:

     - said exploring different configurations of the network cells comprises iterating the following steps:

       - building a search tree (**T**) in which each node of the search tree corresponds to a respective different configuration of the network cells, said building a search tree comprising:
       - selecting (**505**) a path of nodes of the search tree from a search tree root node (**425**) to a search tree leaf node (**430**), wherein the nodes in the path are selected by means of a node selection policy;
       - expanding (**510**) the search tree by identifying if at least one new tree child node (**515**) in respect of the search tree leaf node is available and, if available, assigning to each new tree child node (**515**) a respective child node value, wherein said assigning values to the new tree child nodes comprises:

         - predicting, by means of a machine learning model (**520**), values of network performance indicators (**521**) corresponding to the different configurations of network cells that correspond to each of the new tree child nodes, and
         - calculating values of a reward function in respect of the predicted values of the network performance indicators;

       - selecting, among the new tree child nodes, at least one new tree child node according to a ranking of the calculated values of the new tree child nodes;
       - subjecting to simulation by a network simulator (**210**) the selected at least one new tree child node for obtaining simulated values of the network performance indicators (**213**) corresponding to the different configuration of network cells that corresponds to the selected at least one new tree child node;
       - calculating values of the reward function in respect of the simulated values of the network performance indicators;
       - updating (**530**) a respective node information of the selected at least one new tree child node and of the search tree nodes back along the path from the selected at least one new tree child node to the search tree root node;
       - based on the calculated values of the reward function, assessing a goodness of the different configuration of network cells corresponding to the selected at least one new tree child node compared to the configuration of network cells corresponding to the search tree root node, and

     - when a suitable goodness is assessed for the al least one new tree child node, terminating said iterating and automatically deploying on field a new configuration of network cells by modifying one or more of the modifiable parameters of network cells, **characterized in that**

the method comprises identifying a geographic area of interest covered by the mobile communications network, wherein identifying the geographic area of interest comprises classifying network cells covering the geographic area of interest in a first class of cells (**110**) having modifiable parameters that are modifiable by the self-organizing network, and a second class of cells (**115**) in the neighbourhood of the cells of the first class and whose parameters are not modifiable.

2. The method of claim 1, wherein said node selection policy is based on an Upper Confidence Bound - UCB - criterion.

3. The method of any one of the preceding claims, wherein updating (**530**) a respective node information comprises updating a node average value and a node visit count, said node average value being calculated by averaging the calculated values of the reward function with the previously calculated reward function values in respect of the node.

4. The method of any one of the preceding claims, wherein said network performance indicators comprise at least one of the following indicators:

   - number of overtarget cells that are experiencing a traffic load higher than a predetermined threshold traffic load;
   - total cell traffic that exceeds a predetermined overtarget total traffic threshold;
   - throughput guaranteed by the cells;
   - throughput offered to users of the cellular mobile communications network.

5. The method of claim 4, wherein said reward function is a linear combination of two or more of said network performance indicators.

6. The method of any one of the preceding claims, wherein said network simulator is a simulator of the type used in a planning phase of mobile communications network, configured to simulate propagations of radio signals taking into account a description of the geographic area covered by the network cells.

7. The method of any one of the preceding claims, wherein said exploring and evaluating different configurations of the network cells are performed off-line in background, while the mobile communications network continues operating according to the current configuration of network cells.

8. The method of any one of the preceding claims, wherein said exploring different configurations of the network cells comprises, at each iteration or at least every predetermined number of iterations:

   - building the search tree by selecting as a new search tree root node (**425**) one of the new tree child nodes (**515**) identified in previous iterations and which, based on the calculated values of the reward function in respect of the simulated values of the network performance indicators, has an assessed goodness higher than a goodness of the previous search tree root node selected in previous iterations.

9. The method of any one of the preceding claims, wherein said modifiable parameters of network cells comprise one or more of: cell transmission power, electrical tilt of the cell antenna(s), azimuth of the cell antenna(s), parameters affecting a radiation diagram and a power spatial distribution, and parameters controlling radiation patterns for active antennas.

10. The method of any one of the preceding claims, wherein said machine learning model (**520**) comprises a regressor having a loss function selected among: mean squared error, mean absolute error, Huber loss, quantile loss.

11. A data processing system (**125**) configured for automatically adjusting modifiable parameters of network cells (**110**) of a self-organizing cellular mobile communications network, the system comprising:

   - a self organizing network module (**130**) comprising a capacity and coverage optimization module (**135**),

   wherein the capacity and coverage optimization module is configured to execute the method of any one of the preceding claims.

**Patentansprüche**

1. Verfahren, das von einem Datenverarbeitungssystem (125) implementiert wird, zum Anpassen von modifizierbaren Parametern von Netzwerkzellen (110) eines selbstorganisierenden zellularen mobilen Kommunikationsnetzwerks, das Folgendes umfasst:

   - Abrufen (605) einer aktuellen Auslegung (205) von Netzwerkzellen (110, 115), die derzeit auf dem Feld eingesetzt werden, wobei die aktuelle Auslegung von Netzwerkzellen für mindestens einige der Netzwerkzellen (110) modifizierbare Parameter beinhaltet;
   - beginnend bei der abgerufenen aktuellen Auslegung der Netzwerkzellen Untersuchen (610, 620) von verschiedenen Auslegungen der Netzwerkzellen, wobei sich jede verschiedene Auslegung der Netzwerkzellen von der abgerufenen aktuellen Auslegung der Netzwerkzellen und von anderen verschiedenen Auslegungen der Netzwerkzellen durch eine Änderung im Wert von mindestens einem der modifizierbaren Parameter von mindestens einer Netzwerkzelle unterscheidet;
   - Beurteilen (625) der untersuchten verschiedenen Auslegungen der Netzwerkzellen, wobei:

     - das Untersuchen von verschiedenen Auslegungen der Netzwerkzellen das Wiederholen der folgenden Schritte umfasst:

       - Aufbauen eines Suchbaums (T), bei dem jeder Knoten des Suchbaums einer jeweiligen verschiedenen Auslegung der Netzwerkzellen entspricht, wobei das Aufbauen eines Suchbaums Folgendes umfasst:
       - Auswählen (505) eines Pfades von Knoten des Suchbaums aus einem Suchbaumwurzelknoten (425) zu einem Suchbaumblattknoten (430), wobei die Knoten im Pfad mittels einer Knotenauswahlrichtlinie ausgewählt werden;
       - Erweitern (510) des Suchbaums durch Identifizieren, ob mindestens ein neuer Baumkindknoten (515) mit Bezug auf den Suchbaumblattknoten verfügbar ist, und, sofern verfügbar, Zuweisen eines jeweiligen Kindknotenwertes zu jedem neuen Baumkindknoten (515), wobei das Zuweisen von Werten zu den neuen Baumkindknoten Folgendes umfasst:

         - Vorhersagen mittels eines Maschinenlernmodells (520) von Werten von Netzwerkleistungsindikatoren (521), die den verschiedenen Auslegungen von Netzwerkzellen entsprechen, die jedem der neuen Baumkindknoten entsprechen, und
         - Berechnen von Werten einer Belohnungsfunktion mit Bezug auf die vorhergesagten Werte der Netzwerkleistungsindikatoren;

       - Auswählen von mindestens einem neuen Baumkindknoten aus den neuen Baumkindknoten gemäß einer Einstufung der berechneten Werte der neuen Baumkindknoten;
       - Unterziehen des ausgewählten mindestens einen neuen Baumkindknotens einer Simulation durch einen Netzwerksimulator (210), um simulierte Werte der Netzwerkleistungsindikatoren (213) zu erhalten, die der verschiedenen Auslegung von Netzwerkzellen entsprechen, die dem ausgewählten mindestens einen neuen Baumkindknoten entspricht;
       - Berechnen von Werten der Belohnungsfunktion mit Bezug auf die simulierten Werte der Netzwerkleistungsindikatoren;
       - Aktualisieren (530) von jeweiligen Knoteninformationen des ausgewählten mindestens einen neuen Baumkindknotens und der Suchbaumknoten zurück entlang des Pfades des ausgewählten mindestens einen neuen Baumkindknotens zum Suchbaumwurzelknoten;
       - auf Basis der berechneten Werte der Belohnungsfunktion Zuweisen einer Güte der verschiedenen Auslegung von Netzwerkzellen, die dem ausgewählten mindestens einen neuen Baumkindknoten entsprechen, verglichen mit der Auslegung von Netzwerkzellen, die dem Suchbaumwurzelknoten entspricht, und

     - wenn eine geeignete Güte für den mindestens einen neuen Baumkindknoten bewertet wird, Beenden des Wiederholens und automatisches Einsetzen einer neuen Auslegung von Netzwerkzellen auf dem Feld durch Modifizieren von einem oder mehreren der modifizierbaren Parameter von Netzwerkzellen,

   **dadurch gekennzeichnet, dass**
   das Verfahren das Identifizieren eines geografischen Gebiets von Interesse umfasst, das vom mobilen Kommunikationsnetzwerk abgedeckt wird, wobei das Identifizieren des geografischen Gebiets von Interesse das Klassifizieren von Netzwerkzellen, die das geografische Gebiet von Interesse abdecken, in eine erste Klasse von Zellen (110) mit modifizierbaren Parametern, die durch das selbstorganisierende Netzwerk modifizierbar sind, und eine zweite Klasse von Zellen (115) in der Nachbarschaft der Zellen der ersten Klasse, deren Parameter nicht modifizierbar sind, umfasst.

2. Verfahren nach Anspruch 1, wobei die Knotenauswahlrichtlinie auf einem Kriterium einer oberen Vertrauensgrenze - UCB - basiert.

3. Verfahren nach einem der vorhergehenden Ansprüche, wobei das Aktualisieren (530) von jeweiligen Knoteninformationen das Aktualisieren eines Knotendurchschnittswertes und einer Knotenbesuchszählung umfasst, wobei der Knotendurchschnittswert durch Mitteln der berechneten Werte der Belohnungsfunktion mit den zuvor berechneten Belohnungsfunktionswerten mit Bezug auf den Knoten berechnet wird.

4. Verfahren nach einem der vorhergehenden Ansprüche, wobei die Netzwerkleistungsindikatoren mindestens einen der folgenden Indikatoren umfassen:

   - Anzahl von Überzielzellen, die eine Verkehrslast erfahren, die höher ist als ein vorbestimmter Verkehrslastschwellwert;
   - Zellgesamtverkehr, der einen vorbestimmten Überzielgesamtverkehrsschwellwert überschreitet;
   - durch die Zellen garantierter Durchsatz;
   - Benutzern angebotener Durchsatz des zellularen mobilen Kommunikationsnetzwerks.

5. Verfahren nach Anspruch 4, wobei die Belohnungsfunktion eine Linearkombination von zwei oder mehr der Netzwerkleistungsindikatoren ist.

6. Verfahren nach einem der vorhergehenden Ansprüche, wobei der Netzwerksimulator ein Simulator des Typs ist, der in einer Planungsphase eines mobilen Kommunikationsnetzwerks verwendet wird und dazu ausgelegt ist, unter Berücksichtigung einer Beschreibung des geografischen Gebiets, das von den Netzwerkzellen abgedeckt wird, eine Ausbreitung von Funksignalen zu simulieren.

7. Verfahren nach einem der vorhergehenden Ansprüche, wobei das Untersuchen und Beurteilen von verschiedenen Auslegungen der Netzwerkzellen offline im Hintergrund durchgeführt werden, während das mobile Kommunikationsnetzwerk weiter gemäß der aktuellen Auslegung von Netzwerkzellen betrieben wird.

8. Verfahren nach einem der vorhergehenden Ansprüche, wobei das Untersuchen von verschiedenen Auslegungen der Netzwerkzellen bei jeder Wiederholung oder mindestens bei jeder vorbestimmten Anzahl von Wiederholungen Folgendes umfasst:

   - Aufbauen des Suchbaums durch Auswählen von einem der neuen Baumkindknoten (515), der bei vorherigen Wiederholungen identifiziert wurde und der, auf Basis der berechneten Werte der Belohnungsfunktion mit Bezug auf die simulierten Werte der Netzwerkleistungsindikatoren, eine bewertete Güte aufweist, die höher ist als eine Güte eines vorherigen Suchbaumwurzelknotens, der bei vorherigen Wiederholungen ausgewählt wurde, als einen neuen Suchbaumwurzelknoten (425).

9. Verfahren nach einem der vorhergehenden Ansprüche, wobei die modifizierbaren Parameter von Netzwerkzellen eines oder mehreres von einer Zellübertragungsleistung, einer elektrischen Neigung der einen oder der mehreren Zellantennen, einem Azimut der einen oder der mehreren Zellenantennen, Parametern, die ein Strahlungsdiagramm und eine räumliche Leistungsverteilung beeinträchtigen, und Parametern die Strahlungsmuster für aktive Antennen steuern, umfassen.

10. Verfahren nach einem der vorhergehenden Ansprüche, wobei das Maschinenlernmodell (520) einen Regressor umfasst, der eine Verlustfunktion aufweist, die aus Folgendem ausgewählt ist: mittlerer quadratischer Fehler, mittlerer absoluter Fehler, Huber-Verlust, Quantilverlust.

11. Datenverarbeitungssystem (125) zum automatischen Anpassen von modifizierbaren Parametern von Netzwerkzellen (110) eines selbstorganisierenden zellularen mobilen Kommunikationsnetzwerks, wobei das System Folgendes umfasst:

- ein selbstorganisierendes Netzwerkmodul (130), das ein Kapazitäts- und Abdeckungsoptimierungsmodul (135) umfasst,

wobei das Kapazitäts- und Abdeckungsoptimierungsmodul dazu ausgelegt ist, das Verfahren nach einem der vorhergehenden Ansprüche auszuführen.

**Revendications**

1. Procédé, mis en oeuvre par un système de traitement de données (125), d'ajustement de paramètres modifiables de cellules de réseau (110) d'un réseau de communications mobiles cellulaires auto-organisé, comprenant :

- la récupération (605) d'une configuration actuelle (205) de cellules de réseau (110, 115) actuellement déployées sur le terrain, la configuration actuelle de cellules de réseau comprenant, pour au moins certaines des cellules de réseau (110), des paramètres modifiables ;
- à partir de la configuration actuelle récupérée des cellules de réseau, l'exploration (610, 620) de différentes configurations des cellules de réseau, chaque configuration différente des cellules de réseau différant de la configuration actuelle récupérée des cellules de réseau et d'autres configurations différentes des cellules de réseau par un changement de la valeur d'au moins un des paramètres modifiables d'au moins une cellule de réseau ;
- l'évaluation (625) des différentes configurations explorées des cellules de réseau, dans lequel :

  - ladite exploration de différentes configurations des cellules de réseau comprend l'itération des étapes suivantes :

    - la construction d'un arbre de recherche (T) dans lequel chaque noeud de l'arbre de recherche correspond à une configuration différente respective des cellules de réseau, ladite construction d'un arbre de recherche comprenant :
    - la sélection (505) d'un chemin de noeuds de l'arbre de recherche d'un noeud racine d'arbre de recherche (425) à un noeud feuille d'arbre de recherche (430), les noeuds dans le chemin étant sélectionnés au moyen d'une politique de sélection de noeuds ;
    - l'extension (510) de l'arbre de recherche en identifiant si au moins un nouveau noeud enfant d'arbre (515) par rapport au noeud feuille d'arbre de recherche est disponible et, s'il est disponible, en attribuant à chaque nouveau noeud enfant d'arbre (515) une valeur de noeud enfant respective, ladite attribution de valeurs aux nouveaux noeuds enfants d'arbre comprenant :

      - la prédiction, au moyen d'un modèle d'apprentissage automatique (520), de valeurs d'indicateurs de performance de réseau (521) correspondant aux différentes configurations de cellules de réseau qui correspondent à chacun des nouveaux noeuds enfants d'arbre, et
      - le calcul de valeurs d'une fonction de récompense en fonction des valeurs prédites des indicateurs de performance de réseau ;

    - la sélection, parmi les nouveaux noeuds enfants d'arbre, d'au moins un nouveau noeud enfant d'arbre selon un classement des valeurs calculées des nouveaux noeuds enfants d'arbre ;
    - la soumission à une simulation par un simulateur de réseau (210) du ou des nouveaux noeuds enfants d'arbre sélectionnés pour obtenir des valeurs simulées des indicateurs de performance de réseau (213) correspondant à la configuration différente de cellules de réseau qui correspond au ou aux nouveaux noeuds enfants d'arbre sélectionnés ;
    - le calcul de valeurs de la fonction de récompense en fonction des valeurs simulées des indicateurs de performance de réseau ;
    - la mise à jour (530) d'informations de noeud respectives du ou des nouveaux noeuds enfants d'arbre sélectionnés et des noeuds d'arbre de recherche le long du chemin du ou des nouveaux noeuds enfants d'arbre sélectionnés au noeud racine d'arbre de recherche ;
    - sur la base des valeurs calculées de la fonction de récompense, l'évaluation d'une qualité de la configuration différente des cellules de réseau correspondant au ou aux au moins un nouveaux noeuds enfants d'arbre sélectionnés par rapport à la configuration de cellules de réseau correspondant au noeud racine d'arbre de recherche, et

- lorsqu'une qualité appropriée est évaluée pour le ou les nouveaux noeuds enfants d'arbre, la terminaison de ladite itération et le déploiement automatique sur le terrain d'une nouvelle configuration de cellules de réseau par modification d'un ou plusieurs des paramètres modifiables de cellules de réseau, **caractérisé en ce que**

le procédé comprend l'identification d'une zone géographique d'intérêt couverte par le réseau de communications mobiles, l'identification de la zone géographique d'intérêt comprenant la classification des cellules de réseau couvrant la zone géographique d'intérêt dans une première classe de cellules (110) ayant des paramètres modifiables qui sont modifiables par le réseau auto-organisé, et une deuxième classe de cellules (115) voisines des cellules de la première classe et dont les paramètres ne sont pas modifiables.

2. Procédé selon la revendication 1, dans lequel ladite politique de sélection de noeuds est basée sur un critère de limite de confiance supérieure, UCB.

3. Procédé selon l'une quelconque des revendications précédentes, dans lequel la mise à jour (530) d'informations de noeud respectives comprend la mise à jour d'une valeur moyenne de noeud et d'un nombre de visites de noeud, ladite valeur moyenne de noeud étant calculée en faisant la moyenne des valeurs calculées de la fonction de récompense avec les valeurs de fonction de récompense précédemment calculées en fonction du noeud.

4. Procédé selon l'une quelconque des revendications précédentes, dans lequel lesdits indicateurs de performance de réseau comprennent au moins l'un des indicateurs suivants :

   - nombre de cellules au-dessus de la cible qui subissent une charge de trafic supérieure à un seuil de charge de trafic prédéterminé ;
   - trafic cellulaire total qui dépasse un seuil de trafic total au-dessus de la cible prédéterminé ;
   - débit garanti par les cellules ;
   - débit offert aux utilisateurs du réseau de communications mobiles cellulaires.

5. Procédé selon la revendication 4, dans lequel ladite fonction de récompense est une combinaison linéaire d'au moins deux desdits indicateurs de performance de réseau.

6. Procédé selon l'une quelconque des revendications précédentes, dans lequel ledit simulateur de réseau est un simulateur du type utilisé dans une phase de planification d'un réseau de communications mobiles, configuré pour simuler des propagations de signaux radio tenant compte d'une description de la zone géographique couverte par les cellules de réseau.

7. Procédé selon l'une quelconque des revendications précédentes, dans lequel lesdites exploration et évaluation de différentes configurations des cellules de réseau sont effectuées hors ligne en arrière-plan, tandis que le réseau de communications mobiles continue de fonctionner selon la configuration actuelle des cellules de réseau.

8. Procédé selon l'une quelconque des revendications précédentes, dans lequel ladite exploration de différentes configurations des cellules de réseau comprend, à chaque itération ou au moins à chaque nombre prédéterminé d'itérations :

   - la construction de l'arbre de recherche en sélectionnant comme nouveau noeud racine d'arbre de recherche (425) l'un des nouveaux noeuds enfants d'arbre (515) identifiés dans les itérations précédentes et qui, sur la base des valeurs calculées de la fonction de récompense par rapport aux valeurs simulées des indicateurs de performance de réseau, présente une qualité évaluée supérieure à une qualité du noeud racine d'arbre de recherche précédent sélectionné dans les itérations précédentes.

9. Procédé selon l'une quelconque des revendications précédentes, dans lequel lesdits paramètres modifiables des cellules de réseau comprennent l'un ou plusieurs parmi : la puissance de transmission de cellule, l'inclinaison électrique de la ou des antennes de cellule, l'azimut de la ou des antennes de la cellule, des paramètres affectant un diagramme de rayonnement et une distribution spatiale de puissance, et des paramètres contrôlant les diagrammes de rayonnement pour les antennes actives.

10. Procédé selon l'une quelconque des revendications précédentes, dans lequel ledit modèle d'apprentissage automatique (520) comprend un régresseur ayant une fonction de perte sélectionnée parmi : l'erreur quadratique moyenne, l'erreur absolue moyenne, la perte de Huber, la perte de quantile.

11. Système de traitement de données (125) configuré pour ajuster automatiquement des paramètres modifiables de cellules de réseau (110) d'un réseau de communications mobiles cellulaires auto-organisé, le système comprenant :

   - un module de réseau auto-organisé (130) comprenant un module d'optimisation de capacité et de couverture (135),

   dans lequel le module d'optimisation de capacité et de couverture est configuré pour exécuter le procédé selon l'une quelconque des revendications précédentes.

Fig. 1

**Fig. 2**

Fig. 3

MCTS

Fig. 4A

MCTS Selection phase

Fig. 4B

MCTS Expansion phase

Fig. 4C

530 Backpropagation (update node information)

213 KPIs values from simulation

210 Network Simulator

523 Reward Function Calculator

505 Selection (node selection policy)

510 Expansion (new config. generat.)

515

427 427 427 430 T

+ 0.5 + 0.25 + 0.75 - 0.98 - 0.75 + 0.1 +0.98

New possible Network configurations

523 Reward Function Calculator

521 KPIs values predictions

520 Network Simulator Model (Machine Learning Model)

525

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013122885 A1
- WO 2021045225 A2
- CN 109946673 A
- EP 1329120 B1

**Non-patent literature cited in the description**

- **NIKOLAY DANDANOV et al.** Dynamic Self-Optimization of the Antenna Tilt for Best Trade-off Between Coverage and Capacity in Mobile Networks. *Wireless Personal Communications,* 2017, vol. 92, 251-278
- **CAMERON B. BROWNE et al.** A Survey of Monte Carlo Tree Search Methods. *IEEE Transactions on Computational Intelligence and AI in Games,* March 2012, vol. 4 (1
- Monte Carlo Tree Search: a Tutorial. **MICHAEL C. FU.** Proceedings of the 2018 Winter Simulation Conference. ACM